(19) Europäisches Patentamt / European Patent Office / Office européen des brevets

(11) **EP 2 985 678 B1**

(12) **EUROPEAN PATENT SPECIFICATION**

(45) Date of publication and mention
of the grant of the patent:
**24.04.2019 Bulletin 2019/17**

(51) Int Cl.:
*G06F 3/03* *(2006.01)*      *G06F 3/041* *(2006.01)*
*G06F 3/01* *(2006.01)*

(21) Application number: **14002804.4**

(22) Date of filing: **11.08.2014**

(54) **Position detection system and method of calibrating a position detection system**

Positionsdetektionssystem und Verfahren zur Kalibrierung eines Positionsdetektionssystems

Système de détection de position et procédé d'étalonnage d'un système de détection de position

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2016 Bulletin 2016/07**

(73) Proprietor: **Alpine Electronics, Inc.
Tokyo (JP)**

(72) Inventor: **Galos, Andreas
70567 Stuttgart (DE)**

(74) Representative: **Schmitt-Nilson Schraud Waibel
Wohlfrom
Patentanwälte Partnerschaft mbB
Pelkovenstraße 143
80992 München (DE)**

(56) References cited:
**US-A1- 2004 201 575      US-A1- 2005 248 539
US-A1- 2013 147 833      US-A1- 2014 025 263**

## Description

The present invention relates to a position detection system, comprising a proximity sensor device which is configured to detect at least one position of an object approaching towards at least one input device, and a method of calibrating a position detection system comprising a proximity sensor device.

Object position detection systems known in the art, for example, comprise proximity sensors which detect an approaching of an object to be detected, for example an object of a human such as a human's finger or hand approaching a graphical user interface (GUI) of an automotive input device. For example, when a user's hand approaches the GUI of the input device, such as a human machine interface (HMI) of a head unit in an automobile, a particular function of the head unit may be controlled. For example, when the user's hand is approaching the head unit, a display screen of the head unit may be switched to a particular appearance, such as an enlargement of certain display areas approached by the hand. In this field, there is typically the requirement that the position of the user's finger or hand detected by the position detection system should be quite accurate, so that the user has an intuitive feeling in controlling the respective function.

Such position detection systems, like 3D finger tracking sensors, are becoming increasingly popular for proximity detection or gesture control. However, in typical implementations, such as in a vehicle, a finger tracking sensor is often an independent system component, which needs to be calibrated to real-world coordinates for correct coordinate output when used in the final system installation. Such a calibration could become necessary several times during lifetime, e.g. after mechanical impact like vehicle vibration which may cause some misalignment.

A typical calibration process of a finger tracking sensor is initialized and carried out manually. For example, the user needs to start a calibrating procedure which instructs the user to carry out certain movements for calibrating position detection. Potential problems involved with such calibrating procedures may be as follows:
Some users do not understand the need for calibration. Therefore, they do not see a need to calibrate, and thus will not initiate such calibration procedure. As a consequence, the sensor output may be misaligned and not correct. Further, such calibration is often annoying and feeled like a waste of time, therefore users are not motivated to calibrate the sensor.

If a calibration (e.g., made at a factory or at initial user setup) has an error, then this error typically remains until the next manual calibration. It may occur that such error is not detected, and then mismatching can continuously happen during normal operation when controlling functions of the input device. Further, the result of a one-time calibration can become invalid during a long period of time of operation by general drifting or some unexpected mechanical impact. This may result in wrong coordinates and needs manual recalibration, which is inappropriate effort for the general user.

US 8 504 944 A discloses an image processing apparatus which includes an image display control unit controlling an image display on a display screen, an image generating unit generating a question image including a question and option buttons configured by icons that can be arbitrarily selected for the question, a position detecting unit detecting a position of a pointer present on the display screen from imaging data acquired by imaging the display screen, a position information storing unit storing positions of the icons when the question image is displayed on the display screen, and a control unit specifying an icon out of the icons selected by the pointer based on the position of the pointer and calibrating the position of the pointer based on the position of the icon, which is stored in the position information storing unit, corresponding to the icon specified to have been selected.

US 2005/248539 A1 discloses an apparatus for detecting a pointer relative to a touch surface which includes at least two spaced imaging assemblies having overlapping fields of view encompassing the touch surface. The imaging assemblies see the touch surface in three-dimensions as a perspective view. The imaging assemblies acquire overlapping images from different locations. A processor receives and processes image data generated by at least one of the imaging assemblies to determine the location of the pointer relative to the touch surface. A self-calibration technique is used to calibrate the touch system. For example, eight calibration points around the periphery of the touch surface are chosen, such as the four corners and the mid-points along each side edge of the touch surface 54 are selected as calibration points, since the (X,Y) positions at these calibration points are easy to measure, provide reproduceable calibration points, and are easily located by users and at each of these (X,Y) positions Z = 0 cm.

US 2004/201575 A1 discloses an auto-aligning touch system and method which includes a touch surface on which an image is displayed. Particularly, it relates to a touch system and method that uses an acquired image of a touch surface on which an image having at least one known reference mark is presented, to automatically calibrate the touch system by mapping the touch screen coordinate system to the display coordinate system. The auto-calibration procedure is based on the principle that the computer display coordinate system is known and that in order to calibrate the touch system, it is only necessary to determine the location of a reference mark on the touch screen so that the determined reference mark location can be mapped to the known computer display coordinate system.

It is an object of the present invention to provide a position detection system and a method of calibrating a position detection system which are capable to increase an accuracy of a proximity sensor device.

The invention relates to a position detection system and method according to the appended claims.

In a potential implementation, during normal operation, the user is touching the input device typically many times at many locations, for example to activate some functions in the GUI displayed at the input device. Then, every time the user's finger is actually touching the input device, e.g. the touch display surface, the proximity sensor device may be calibrated by the calibration device in the background automatically. The user is not required to initiate a manual calibration procedure. Moreover, the calibration will become better and better over time during normal operation of the input device, thus increasing accuracy of the proximity sensor device. It is assumed that input devices, such as touch screens, are calibrated in the factory and therefore output correct position coordinates over lifetime.

Further advantages and aspects of the invention will be described with reference to the following Figures, in which:

Fig. 1        shows a schematic arrangement of a position detection system according to an embodiment of the invention,

Fig. 2        shows a potential implementation of a position detection system according to an embodiment of the invention which is coupled to an input device comprising a touch screen,

Figs. 3A-3D   show the embodiment of a position detection system according to Fig. 2 in various states of normal operation in which the user is touching the touch screen at different locations,

Fig. 4        shows a flowchart of a method for calibrating a position detection system according to an embodiment of the invention.

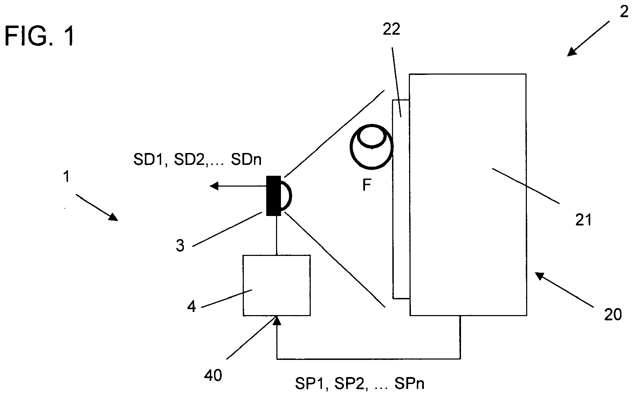

Fig. 1 shows a schematic arrangement of a position detection system according to an embodiment of the invention. The position detection system 1 comprises a proximity sensor device 3 for detecting at least one position of an object (such as a human finger F, or any other object like a pen, etc.) approaching towards an input device 20. For example, the proximity sensor device 3 detects at least one three-dimensional position of an object with respect to the input device 20. It may be implemented as a 3D object tracking sensor device which tracks a three-dimensional position and motion of a user's finger approaching the input device 20. For example, the proximity sensor device 3 comprises at least one camera based sensor. Such camera based sensor has a field of view, as schematically shown in Fig. 1, for monitoring position and/or motion of an object (e.g., finger F) approaching towards the input device 20.

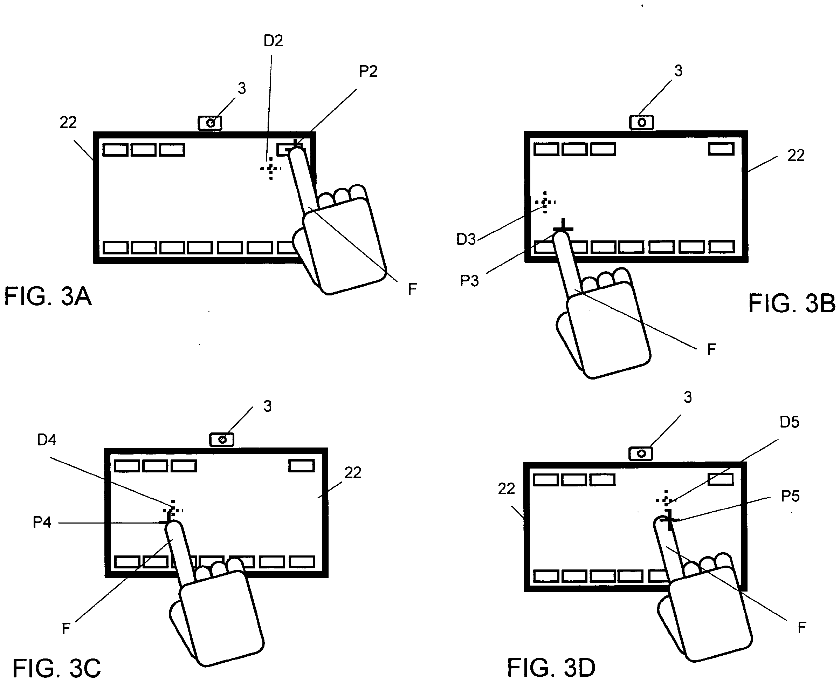

According to the embodiment as shown in Fig. 1, the input device 20 comprises a touch screen 21 having a touch display surface 22 for displaying a GUI for operation by the user. For example, the user's finger F may touch a particular area on the GUI displayed on the touch display surface 22 for operation of a particular control function. For instance, when the user's finger F is touching the touch display surface 22, the touch screen 21 is configured to generate respective positions signals SP1, SP2, SP3, ..., SPn for a respective touch (which is explained in more detail with respect to Figures 3A-3D). Each of the position signals SP1 to SPn contains information regarding a respective position of the finger F when touching the touch display surface 22 of the touch screen 21. For example, the respective position signal may contain coordinates x, y, z (e.g., z may be z=0) of the respective position with respect to a coordinate system of the input device.

In a particular implementation, the position detection system 1 is installed in a vehicle. The proximity sensor device 3 may be coupled with a head unit 2 of the vehicle which comprises the input device 20. On the touch display surface 22, a GUI related to certain functions to be controlled in the vehicle may be displayed.

Upon detection of an object, such as the finger F, the proximity sensor device 3 produces a respective detection signal SD1, SD2, SD3, ..., SDn, each indicating a respective finger position, for example with respect to a sensor coordinate system or an input device coordinate system. For example, the respective detection signal may contain coordinates x, y, z of the respective detected position with respect to a sensor coordinate system or an input device coordinate system. For example, the detection signals SD1 to SDn may be sent to the input device 20 which controls, for example, the appearance of particular elements of the GUI shown on the touch display surface accordingly. For example, certain elements of the GUI near the detected finger position may be enlarged. According to another embodiment, a gesture control function may be performed by the input device 20 if the proximity sensor device 3 is implemented as a tracking sensor device.

The position detection system 1 further comprises a calibration device 4 for calibrating the proximity sensor device 3 with respect to position detection thereof. The calibration device 4 comprises a terminal 40 for coupling to the input device 20 for receiving the position signals SP1 to SPn. In a particular implementation, the calibration device 4 may be a component, such as a microprocessor, which may be contained in the proximity sensor device 3. According to another embodiment, the calibration device 4 may be a separate component installed externally from the sensor device 3, or may be a component of the input device 20 and/or of the head unit 2. With calibration of the proximity sensor device 3, the calibration device 4 adjusts generation of a respective detection signal SD1 to SDn indicative of a detected position of an object to coincide or correspond with a corresponding position signal SP1 to SPn received from the input device 20 when the object is touching the input device, as explained in more detail below. More particularly, after the calibration, the position coordinates contained in a generated detection signal SD1 to SDn coincide or correspond with respective position coordinates of a corresponding position signal SP1 to SPn.

For example, the sensor device 3 needs to be calibrated to real-world coordinates, so that when the user is touching the touch display surface 22, the sensor coordinates and the touch screen coordinates are corresponding to each other or even identical.

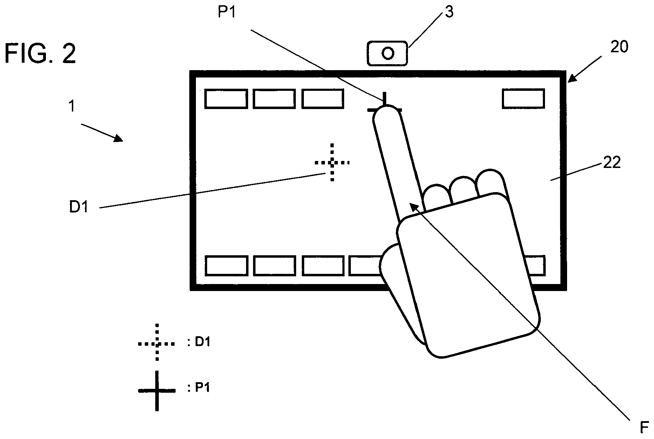

Fig. 2 shows a potential implementation of a position detection system 1 according to an embodiment of the invention which is coupled to an input device comprising a touch screen.

Referring to Fig. 2, the proximity sensor device 3 is installed, for example, proximate the top edge of the touch display surface 22 of the input device 20. However, other installation locations are also possible. Once the user is touching with finger F the touch display surface 22 at any position, such as position P1 shown in Fig. 2, the input device 20 generates a position signal SP1 indicative of that position P1. It is presumed that the touch screen coordinates output with position signal SP1 are correct and the coordinates of the proximity sensor device 3 output with a corresponding detection signal SD1 can have some offset error (which is then eliminated by calibration). In an exemplary scenario, as shown in Fig. 2, when the input device 20 detects a position P1 when the finger F is touching the touch display surface 22, the proximity sensor device 3 detects a position D1 which does not correspond to position PI, but is offset by a particular offset value. Thus, the position signal SP1 output by the input device 20 and corresponding detection signal SD1 output by the proximity sensor device 3 do not correspond.

Fig. 3A-3D show the embodiment according to Fig. 2 in various states of normal operation in which the user is touching the touch display surface at different locations for controlling one or more functions, which is also used for automatically calibrating the proximity sensor device in the background.

According to Fig. 3A, the user's finger F is touching the touch display surface 22 at a position P2 at the top right corner for controlling a function, with the input device 20 generating a position signal SP2 indicative of that position P2. In the exemplary scenario as shown in Fig. 3A, when the input device 20 detects a position P2 when the finger F is touching the touch display surface 22, the proximity sensor device 3 detects a position D2 which is different from position P2. Thus, the position signal SP2 output by the input device 20 and corresponding detection signal SD2 output by the proximity sensor device 3 do not correspond. The position signal SP2 is provided to the terminal 40 and supplied to the calibration device 4 which calibrates the proximity sensor device 3 with respect to position detection. After the calibration, the position signal SP2 and corresponding detection signal SD2 output by the proximity sensor device 3 are corresponding to each other, i.e. are indicating the same position P2 of the detected object with respect to the input device 20. For example, the position coordinates of the finger F contained in both signals SP2 and SD2 are the same with respect to a common coordinate system. Such common coordinate system may be, for example, a coordinate system of the input device 20.

According to Fig. 3B, the user's finger F is touching the touch display surface 22 at a position P3 at the bottom left corner for controlling a different function as in Fig. 3A, with the input device 20 generating a position signal SP3 indicative of that position P3. In the exemplary scenario of Fig. 3B, when the input device 20 detects the position P3 upon touching the touch display surface 22, the proximity sensor device 3 detects a position D3 which is different from position P3. Thus, the position signal SP3 output by the input device 20 and corresponding detection signal SD3 output by the proximity sensor device 3 do not correspond. The position signal SP3 is supplied to the calibration device 4 which again calibrates the proximity sensor device 3 with respect to position detection. After the calibration, the position signal SP3 and corresponding detection signal SD3 output by the proximity sensor device 3 are corresponding to each other, i.e. are indicating the same position P3 of the detected object with respect to the input device 20. For example, the position coordinates of the finger F contained in both signals SP3 and SD3 are the same with respect to a common coordinate system.

According to Fig. 3C, the user's finger F is touching the touch display surface 22 at a position P4 in some area of the display surface for controlling a different function, with the input device 20 generating a position signal SP4 indicative of that position P4. In the exemplary scenario as shown in Fig. 3C, when the input device 20 detects position P4 when the finger F is touching the touch display surface 22, the proximity sensor device 3 detects a position D4 which is different from position P4. Thus, the position signal SP4 output by the input device 20 and corresponding detection signal SD4 output by the proximity sensor device 3 are different. The position signal SP4 is supplied to the calibration device 4 which again calibrates the proximity sensor device 3 with respect to position detection. After the calibration, the position signal SP4 and corresponding detection signal SD4 output by the proximity sensor device 3 are corresponding with each other, i.e. are indicating the same position P4 of the detected object with respect to the input device 20. For example, the position coordinates of the finger F contained in both signals SP4 and SD4 are the same with respect to a common coordinate system.

According to Fig. 3D, the user's finger F is touching the touch display surface 22 at a position P5 at some area of the display surface for controlling a different function, with the input device 20 generating a position signal SP5 indicative of that position P5. In the scenario of Fig. 3D, when the input device 20 detects the position P5 upon touching the touch display surface 22, the proximity sensor device 3 detects a position D5 which is still different from position P5. Thus, the signal SP5 output by the input device 20 and corresponding detection signal SD5 output by the proximity sensor device 3 are different. The position signal SP5 is supplied to the calibration device 4 which again calibrates the proximity sensor device 3 with respect to position detection. After the calibration, the position signal SP5 and corresponding detection signal SD5 output by the proximity sensor device 3 are corresponding with each other, i.e. are indicating the same position P5 of the detected object F with respect to the input device 20. For example, the position coordinates of the finger F contained in both signals SP5 and SD5 are the same with respect to a common coordinate system.

In this way, the proximity sensor device 3 is repeatedly calibrated over at least a period of time during normal operation of the input device. By touching different locations at the input device, the proximity sensor device 3 is advantageously calibrated with respect to different locations with respect to the input device 20. Particularly, the calibration device repeatedly receives from the input device 20 position signals SP1 to SPn over a period of time during normal operation of the input device 20. Each of the position signals SP1 to SPn contains information regarding a respective position of finger F touching the touch display surface 22. The calibration device 4 then each time upon receiving of a respective one of the position signals SP1 to SPn repeatedly calibrates the proximity sensor device 3 with respect to position detection. For example, the proximity sensor device 3 is repeatedly calibrated each time when detecting touching of the touch display surface 22 by an object.

The calibration may be performed continuously over a period of time, which means that calibration is performed continuously upon touching the input device during normal operation over a period of time. Such period of time may be set in advance, and can be modified if required. According to another embodiment, calibration may be performed at intervals, e.g. at certain time intervals, or when receiving particular ones of multiple position signals from the input device, for example at every second received position signal, or at intervals over respective periods of time (such as every day for at least 15 minutes). Such intervals may be set in advance, and can be modified if required. The intervals may also be set depending on environmental influences, such as detected vibrations of a head unit in a vehicle, travelled distance of the vehicle, and/or impacts like accidents. Various implementations are possible in this regard.

Preferably, the user is not required to conduct a manually initiated calibration procedure. Rather, the user is touching the input device (e.g., the touch display surface) in normal operation of the input device, which operation is also used for calibration in the background.

In normal operation, the input device is configured to receive instructions from the user, e.g. for controlling one or more functions of a controlled device, such as one or more functions of a media player, not related to calibration. Particularly, the received instructions are not related to calibration instructions. For example, the user is touching elements of a GUI provided on the input device in normal operation thereof to activate one or more functions of the GUI. The functions are not related to a calibration procedure. No separate calibration operation is necessary, in which a special calibration procedure different from a GUI in normal operation is displayed on the input device. During normal operation, the user is typically touching the input device (e.g., touch screen) many times at many points to activate various functions according to the GUI which are related to normal operation (i.e. not related to calibration). For example, each time the user's finger is actually touching the touch display surface to activate some function in normal operation, e.g. related to controlling a media player, the proximity sensor device is calibrated in the background automatically. Further, the calibration will become better and better over time. The calibration is not related to a particular arrangement or design of the GUI. That is, no matter where the user is touching the input device and independent from a particular GUI, a correct calibration is made. For example, proximity sensor coordinates are continuously calibrated every time the user is touching the touch screen. It is not necessary to initialize and perform a manual calibration by the user.

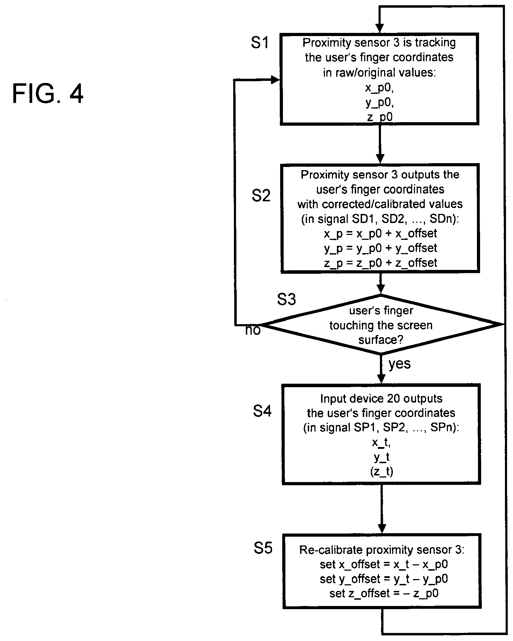

Fig. 4 shows a flowchart of a method for calibrating a position detection system according to an embodiment of the invention.

Basically, according to the following embodiment, each of the position signals SP1 to SPn contains information indicative of first coordinates $x\_t$, $y\_t$, $z\_t$ indicating the location where the respective object F is touching the input device 20, i.e. its touch display surface 22. The proximity sensor device 3 outputs the detection signals SD1 to SDn when detecting a position of an object which each contain information indicative of second coordinates of the respective object $x\_p$, $y\_p$, $z\_p$ indicating the location where the respective object F is detected by the proximity sensor device 3. The first and second coordinates may be in a same or different coordinate systems. If different coordinate systems are used, then a spatial relationship between the coordinate systems should be known which could be used in the calibration.

In step S1, the proximity sensor device 3 initially is tracking an object (here: a user's finger) position according to position coordinates in raw/original values, which are for example $x\_p0$, $y\_p0$, $z\_p0$. In step S2, the proximity sensor device 3 outputs detected object position coordinates with corrected/calibrated values as a result of a preceding calibration procedure:

$$x\_p = x\_p0 + x\_offset$$

$$y\_p = y\_p0 + y\_offset$$

$$z\_p = z\_p0 + z\_offset$$

These position coordinates $x\_p$, $y\_p$, $z\_p$ are contained in the calibrated output signal of the proximity sensor device 3, such as SD1 to SDn. Initially, i.e. before calibration, the offset values $x\_offset$, $y\_offset$, $z\_offset$ used for correction of the detection signal are set to be zero.

In step S3, it is detected whether the touch display surface is touched by an object. If not, then the process returns to step S1. If yes, then in step S4 a respective position signal SP1 to SPn is generated by the input device 20 containing information regarding a respective position of the detected object touching the touch display surface. For example, each of the position signals SP1 to SPn is containing the position coordinates $x\_t$, $y\_t$ and $z\_t$, wherein $z\_t$ may be set as $z\_t = 0$ in a coordinate system of the input device as the detected z-position is the position of the touch display surface. For step S4, it is assumed that the output of the input device (e.g., touch screen output) with respect to position of a detected touch is already calibrated and correct.

In step S5, the proximity sensor device 3 is calibrated with respect to detecting the position of the finger F upon receiving of a respective one of the position signals SP1 to SPn, for example each time the calibration device 4 receives one of the position signals SP1 to SPn. (Re-)Calibration of the proximity sensor device may be made, for example, as follows:

$$set\ x\_offset = x\_t - x\_p0$$

$$set\ y\_offset = y\_t - y\_p0$$

$$set\ z\_offset = -z\_p0$$

wherein $x\_offset$, $y\_offset$ and $z\_offset$ are offset parameters of a detected position of the proximity sensor device 3. With determining the respective offset parameters, the calibration device 4 sets the coordinates $x\_p$, $y\_p$, $z\_p$ of a proximity sensor detection signal SD1 to SDn to correspond to the coordinates $x\_t$, $y\_t$, $z\_t$ received with a corresponding position signal SP1 to SPn. If the coordinates are determined in a common coordinate system, e.g. related to the input device 20, then the coordinates $x\_p$, $y\_p$, $z\_p$ may be set to be equal to the coordinates $x\_t$, $y\_t$, $z\_t$. Otherwise, a spatial relationship between different coordinate systems should be taken into account as well. With calibration of the proximity sensor device 3 a respective one of the offset parameters $x\_offset$, $y\_offset$, $z\_offset$ is set by calculating a difference between the coordinates $x\_t$, $y\_t$, $z\_t$ received with a corresponding position signal SP1 to SPn and respective coordinates $x\_p$, $y\_p$, $z\_p$ of the corresponding detection signal.

For step S5, it is assumed that in the moment of touching the touch display surface, $z\_t = 0$ (i.e. finger distance to the touch display surface is zero), therefore $z\_offset = z\_t - z\_p0$ is the same as $z\_offset = -z\_p0$.

The process then returns to step S1 for repeatedly iterating the steps S1 to S5. The determined offset parameters are then used for output of a new proximity sensor detection signal SD1 to SDn with coordinates $x\_p$, $y\_p$, $z\_p$ in step S2. In this way, the proximity sensor device 3 is repeatedly (re-)calibrated with respect to position detection of an object upon receiving of a respective position signal SP1, SP2, SPn from input device 20 according to step S4.

**Claims**

1.  A position detection system (1), comprising:

    - a proximity sensor device (3) which is configured to detect at least one three-dimensional position with respect to at least one input device (20) of an object (F) approaching towards the at least one input device (20), and to output at least one detection signal (SD1, SD2, SDn) indicative of a detected position of the object (F),
    - a calibration device (4) which is configured to calibrate the proximity sensor device (3) with respect to a position detection and comprises a terminal (40) configured for coupling to the at least one input device (20),
    - wherein the calibration device (4) is configured to repeatedly receive from the at least one input device (20) position signals (SP1, SP2, SPn) over at least a period of time during normal operation of the input device (20) in which the input device (20) is configured to receive instructions from the user not related to calibration,
    - wherein each of the position signals (SP1, SP2, SPn) contains information regarding a respective position of the object (F) touching the at least one input device (20),
    - wherein the calibration device (4) is configured to repeatedly calibrate the proximity sensor device (3) such that the calibration device (4) adjusts generation of one of the detection signals (SD1, SD2, SDn) to correspond with a corresponding position signal of the position signals (SP1, SP2, SPn) received from the input device (20) when the object (F) is touching the input device (20).

2. The position detection system according to claim 1, wherein the proximity sensor device (3) is configured to track a motion of an object (F) approaching towards the at least one input device (20).

3. The position detection system according to any of claims 1 to 2, wherein the proximity sensor device (3) comprises at least one camera based sensor.

4. The position detection system according to any of claims 1 to 3, wherein the at least one input device (20) comprises a touch screen (21) and wherein each of the position signals (SP1, SP2, SPn) contains information regarding a respective position of the object (F) touching a touch display surface (22) of the touch screen (21).

5. The position detection system according to any of claims 1 to 4,

   - wherein each of the position signals (SP1, SP2, SPn) contains information indicative of first coordinates (x_t, y_t, z_t) of where the object (F) is touching the at least one input device (20),
   - the at least one detection signal (SD1, SD2, SDn) containing information indicative of second coordinates (x_p, y_p, z_p) of the object (F),
   - wherein the calibration device (4) is configured to set the second coordinates (x_p, y_p, z_p) to correspond to the first coordinates (x_t, y_t, z_t) received with the corresponding position signal (SP1, SP2, SPn).

6. The position detection system according to any of claims 1 to 5, wherein the position detection system (1) is configured to be installed in a vehicle.

7. The position detection system according to claim 6, wherein the proximity sensor device (3) is configured to be coupled with a head unit (2) of the vehicle comprising the at least one input device (20).

8. A vehicle comprising a position detection system (1) according to any of the preceding claims.

9. A method of calibrating a position detection system (1) comprising a proximity sensor device (3) which is configured to detect at least one three-dimensional position with respect to at least one input device (20) of an object (F) approaching towards the at least one input device (20) and to output at least one detection signal (SD1, SD2, SDn) indicative of a detected position of the object (F), the method comprising:

   - detecting touching of the at least one input device (20) by the object (F) and generating position signals (SP1, SP2, SPn) by the at least one input device (20) containing information regarding a position of the object (F) touching the at least one input device (20),
   - receiving from the at least one input device (20) the position signals (SP1, SP2, SPn) repeatedly over at least a period of time during normal operation of the input device (20) in which the input device (20) is configured to receive instructions from the user not related to calibration,
   - repeatedly calibrating the proximity sensor device (3) thereby adjusting the generation of one of the detection signals (SD1, SD2, SDn) to correspond with a corresponding position signal of the position signals (SP1, SP2, SPn) received from the input device (20) when the object (F) is touching the input device (20).

10. The method according to claim 9, wherein the proximity sensor device (3) is repeatedly calibrated each time when detecting touching of the at least one input device (20) by the object (F).

11. The method according to one of claims 9 or 10, wherein the at least one input device (20) comprises a touch screen (21) having a touch display surface (22), and the step of detecting touching comprises detecting touching of the touch display surface (22) by the object (F) and generating the position signals (SP1, SP2, SPn) by the at least one input device (20) containing information regarding a position of the object (F) touching the touch display surface (22).

12. The method according to one of claims 9 to 11, wherein the calibration of the proximity sensor device (3) comprises setting of an offset parameter (x_offset, y_offset, z_offset) of a detected position detected by the proximity sensor device (3) using a corresponding one of the received position signals (SP1, SP2, SPn).

13. The method according to claim 12,

   - wherein each of the position signals (SP1, SP2, SPn) contains information indicative of first coordinates (x_t, y_t, z_t) of where the object (F) is touching the at least one input device (20),
   - wherein the proximity sensor device (3) is configured to output the at least one detection signal (SD1, SD2, SDn) when detecting the position of the object (F), the at least one detection signal (SD1, SD2, SDn) containing information indicative of second coordinates (x_p, y_p, z_p) of the object (F),
   - wherein the calibration of the proximity sensor device (3) comprises setting of the offset parameter (x_offset, y_offset, z_offset) by calculating a difference between the first coordinates (x_t, y_t, z_t) and the second coordinates (x_p, y_p, z_p) .

**Patentansprüche**

1. Positionsdetektionssystem (1), umfassend:

   - eine Näherungssensorvorrichtung (3), die dazu ausgelegt ist, mindestens eine dreidimensionale Position in Bezug auf mindestens eine Eingabevorrichtung (20) eines Objekts (F) zu detektieren, das sich der mindestens einen Eingabevorrichtung (20) annähert, und mindestens ein Detektionssignal (SD1, SD2, SDn) auszugeben, das eine detektierte Position des Objekts (F) angibt,
   - eine Kalibriervorrichtung (4), die dazu ausgelegt ist, die Näherungssensorvorrichtung (3) in Bezug auf eine Positionsdetektion zu kalibrieren, und einen Anschluss (40) umfasst, der zum Koppeln mit der mindestens einen Eingabevorrichtung (20) ausgelegt ist,
   - wobei die Kalibriervorrichtung (4) dazu ausgelegt ist, von der mindestens einen Eingabevorrichtung (20) wiederholt Positionssignale (SP1, SP2, SPn) über mindestens eine Zeitspanne während des normalen Betriebs der Eingabevorrichtung (20) zu empfangen, in der die Eingabevorrichtung (20) dazu ausgelegt ist, Anweisungen von dem Anwender zu empfangen, die sich nicht auf Kalibrierung beziehen,
   - wobei jedes der Positionssignale (SP1, SP2, SPn) Information über eine entsprechende Position des Objekts (F) umfasst, das die mindestens eine Eingabevorrichtung (20) berührt,
   - wobei die Kalibriervorrichtung (4) dazu ausgelegt ist, die Näherungssensorvorrichtung (3) wiederholt zu kalibrieren, so dass die Kalibriervorrichtung (4) die Erzeugung eines der Detektionssignale (SD1, SD2, SDn) so anpasst, dass es einem entsprechenden Positionssignal der von der Eingabevorrichtung (20) empfangenen Positionssignale (SP1, SP2, SPn) entspricht, wenn das Objekt (F) die Eingabevorrichtung (20) berührt.

2. Positionsdetektionssystem nach Anspruch 1, wobei die Näherungssensorvorrichtung (3) dazu ausgelegt ist, eine Bewegung eines Objekts (F) zu verfolgen, das sich der mindestens einen Eingabevorrichtung (20) nähert.

3. Positionsdetektionssystem nach einem der Ansprüche 1 bis 2, wobei die Näherungssensorvorrichtung (3) mindestens einen kamerabasierten Sensor umfasst.

4. Positionsdetektionssystem nach einem der Ansprüche 1 bis 3, wobei die mindestens eine Eingabevorrichtung (20) einen berührungsempfindlichen Bildschirm (21) umfasst und wobei jedes der Positionssignale (SP1, SP2, SPn) Information über eine entsprechende Position des Objekts (F) umfasst, das eine berührungsempfindliche Anzeigefläche (22) des berührungsempfindlichen Bildschirm (21) berührt.

5. Positionsdetektionssystem nach einem der Ansprüche 1 bis 4,

   - wobei jedes der Positionssignale (SP1, SP2, SPn) Information umfasst, die erste Koordinaten (x_t, y_t, z_t) angibt, wo das Objekt (F) die mindestens eine Eingabevorrichtung (20) berührt,
   - wobei das mindestens eine Detektionssignal (SD1, SD2, SDn) Information umfasst, die zweite Koordinaten (x_p, y_p, z_p) des Objekts (F) angibt,
   - wobei die Kalibriervorrichtung (4) dazu ausgelegt ist, die zweiten Koordinaten (x_p, y_p, z_p) so einzustellen, dass sie den ersten Koordinaten (x_t, y_t, z_t) entsprechen, die mit dem entsprechenden Positionssignal (SP1, SP2, SPn) empfangen werden.

6. Positionsdetektionssystem nach einem der Ansprüche 1 bis 5, wobei das Positionsdetektionssystem (1) dazu ausgelegt ist, in einem Fahrzeug installiert zu werden.

7. Positionsdetektionssystem nach Anspruch 6, wobei die Näherungssensorvorrichtung (3) dazu ausgelegt ist, mit einer Kopfeinheit (2) des Fahrzeugs gekoppelt zu werden, die die mindestens eine Eingabevorrichtung (20) umfasst.

8. Fahrzeug, umfassend ein Positionsdetektionssystem (1) nach einem der vorhergehenden Ansprüche.

9. Verfahren zum Kalibrieren eines Positionsdetektionssystems (1), das eine Näherungssensorvorrichtung (3) umfasst, die dazu ausgelegt ist, mindestens eine dreidimensionale Position mit Bezug auf mindestens eine Eingabevorrichtung (20) eines Objekts (F) zu detektieren, das sich der mindestens einen Eingabevorrichtung (20) nähert, und mindestens ein Detektionssignal (SD1, SD2, SDn) auszugeben, das eine detektierte Position des Objekts (F) angibt, wobei das Verfahren umfasst:

   - Detektieren des Berührens der mindestens einen Eingabevorrichtung (20) durch das Objekt (F) und Erzeugen von Positionssignalen (SP1, SP2, SPn) durch die mindestens eine Eingabevorrichtung (20), die Information über eine Position des Objekts (F) umfasst, das die mindestens eine Eingabevorrichtung (20) berührt,
- wiederholtes Empfangen der Positionssignale (SP1, SP2, SPn) von der mindestens einen Eingabevorrichtung (20) über mindestens eine Zeitspanne während des normalen Betriebs der Eingabevorrichtung (20), in der die Eingabevorrichtung (20) dazu ausgelegt ist, Anweisungen von dem Anwender zu empfangen, die sich nicht auf Kalibrierung beziehen,
- wiederholtes Kalibrieren der Näherungssensorvorrichtung (3), wodurch die Erzeugung eines der Detektionssignale (SD1, SD2, SDn) so angepasst wird, dass es einem entsprechenden Positionssignal der von der Eingabevorrichtung (20) empfangenen Positionssignale (SP1, SP2, SPn) entspricht, wenn das Objekt (F) die Eingabevorrichtung (20) berührt.

10. Verfahren nach Anspruch 9, wobei die Näherungssensorvorrichtung (3) wiederholt jedes Mal kalibriert wird, wenn das Berühren der mindestens einen Eingabevorrichtung (20) durch das Objekt (F) detektiert wird.

11. Verfahren nach einem der Ansprüche 9 oder 10, wobei die mindestens eine Eingabevorrichtung (20) einen berührungsempfindlichen Bildschirm (21) mit einer berührungsempfindlichen Anzeigefläche (22) umfasst, und der Schritt des Detektierens des Berührens das Detektieren des Berührens der berührungsempfindlichen Anzeigefläche (22) durch das Objekt (F) und das Erzeugen der Positionssignale (SP1, SP2, SPn) durch die mindestens eine Eingabevorrichtung (20) umfasst, die Information über eine Position des Objekts (F) umfassen, das die berührungsempfindliche Anzeigefläche (22) berührt.

12. Verfahren nach einem der Ansprüche 9 bis 11, wobei die Kalibrierung der Näherungssensorvorrichtung (3) das Einstellen eines Versatzparameters (x_offset, y_offset, z_offset) einer detektierten Position, die von der Näherungssensorvorrichtung (3) detektiert wird, unter Verwendung eines entsprechenden der empfangenen Positionssignale (SP1, SP2, SPn) umfasst.

13. Verfahren nach Anspruch 12,

- wobei jedes der Positionssignale (SP1, SP2, SPn) Information umfasst, die erste Koordinaten (x_t, y_t, z_t, z_t) angibt, wo das Objekt (F) die mindestens eine Eingabevorrichtung (20) berührt,
- wobei die Näherungssensorvorrichtung (3) dazu ausgelegt ist, das mindestens ein Detektionssignal (SD1, SD2, SDn) beim Detektieren der Position des Objekts (F) auszugeben, wobei das mindestens eine Detektionssignal (SD1, SD2, SDn) Information umfasst, die zweite Koordinaten (x_p, y_p, z_p) des Objekts (F) angibt,
- wobei die Kalibrierung der Näherungssensorvorrichtung (3) das Einstellen des Versatzparameters (x_offset, y_offset, z_offset) durch Berechnen einer Differenz zwischen den ersten Koordinaten (x_t, y_t, z_t) und den zweiten Koordinaten (x_p, y_p, z_p) umfasst.

**Revendications**

1. Système de détection de position (1), comprenant :

- un dispositif (3) faisant office de capteur de proximité, qui est configuré pour détecter au moins une position en trois dimensions par rapport à au moins un dispositif d'entrée (20) d'un objet (F) qui s'approche dudit au moins un dispositif d'entrée (20) et pour émettre au moins un signal de détection (SD1, SD2, SDn) qui témoigne d'une position détectée de l'objet (F) ;
- un dispositif d'étalonnage (4) qui est configuré pour étalonner le dispositif (3) faisant office de capteur de proximité, par rapport à une détection de position, et qui comprend une borne (40) configurée pour son accouplement audit au moins un dispositif d'entrée (20) ;
- dans lequel le dispositif d'étalonnage (4) est configuré pour recevoir de manière répétée à partir dudit au moins un dispositif d'entrée (20) des signaux de position (SP1, SP2, SPn) pendant au moins un laps de temps au cours d'une exploitation normale du dispositif d'entrée (20) dans laquelle le dispositif d'entrée (20) est configuré pour recevoir des instructions à partir de l'utilisateur, non liées à l'étalonnage ;
- dans lequel chacun des signaux de position (SP1, SP2, SPn) contient des informations concernant une position respective de l'objet (F) qui entre en contact avec ledit au moins un dispositif d'entrée (20) ;
- dans lequel le dispositif d'étalonnage (4) est configuré pour étalonner de manière répétée le dispositif (3) faisant office de capteur de proximité d'une manière telle que le dispositif d'étalonnage (4) adapte la génération d'un des signaux de détection (SD1, SD2, SDn) pour établir une correspondance avec un signal de position correspondant parmi les signaux de position (SP1, SP2, SPn) reçus à partir du dispositif d'entrée (20) lorsque l'objet (F) entre en contact avec le dispositif d'entrée (20).

2. Système de détection de position selon la revendication 1, dans lequel le dispositif (3) faisant office de capteur de proximité est configuré pour suivre un mouvement d'un objet (F) qui s'approche dudit au moins un dispositif d'entrée (20).

3. Système de détection de position selon l'une quelconque des revendications 1 à 2, dans lequel le dispositif (3) faisant office de capteur de proximité comprend au moins un capteur basé sur une caméra.

4. Système de détection de position selon l'une quelconque des revendications 1 à 3, dans lequel ledit au moins un dispositif d'entrée (20) comprend un écran tactile (21) et dans lequel chacun des signaux de position (SP1, SP2, SPn) contient des informations qui concernent une position respective de l'objet (F) qui entre en contact avec une surface (22) de l'écran tactile (21).

5. Système de détection de position selon l'une quelconque des revendications 1 à 4,

   - dans lequel chacun des signaux de position (SP1, SP2, SPn) contient des informations représentant des premières coordonnées (x_t, y_t, z_t) de l'endroit auquel l'objet (F) entre en contact avec ledit au moins un dispositif d'entrée (20) ;
   - ledit au moins un signal de détection (SD1, SD2, SDn) contient des informations représentant des deuxièmes coordonnées (x_p, y_p, z_p) de l'objet (F) ;
   - dans lequel le dispositif d'étalonnage (4) est configuré pour régler les deuxièmes coordonnées (x_p, y_p, z_p) afin d'établir une correspondance avec les premières coordonnées (x_t, y_t, z_t) reçues avec le signal de position correspondant (SP1, SP2, SPn).

6. Système de détection de position selon l'une quelconque des revendications 1 à 5, dans lequel le système de détection de position (1) est configuré pour être monté dans un véhicule.

7. Système de détection de position selon la revendication 6, dans lequel le dispositif (3) faisant office de capteur de proximité est configuré pour son accouplement à une unité de tête (2) du véhicule comprenant ledit au moins un dispositif d'entrée (20).

8. Véhicule comprenant un système de détection de position (1) selon l'une quelconque des revendications précédentes.

9. Procédé d'étalonnage d'un système de détection de position (1) comprenant un dispositif (3) faisant office de capteur de proximité qui est configuré pour détecter au moins une position en trois dimensions par rapport à au moins un dispositif d'entrée (20) d'un objet (F) qui s'approche dudit au moins un dispositif d'entrée (20) et pour émettre au moins un signal de détection (SD1, SD2, SDn) qui témoigne d'une position détectée de l'objet (F), le procédé comprenant le fait de :

   - détecter une mise en contact dudit au moins un dispositif d'entrée (20) avec l'objet (F) et générer des signaux de position (SP1, SP2, SPn) via ledit au moins un dispositif d'entrée (20) contenant des informations liées à une position de l'objet (F) qui entre en contact avec ledit un dispositif d'entrée (20) ;
   - recevoir à partir dudit au moins un dispositif d'entrée (20) les signaux de position (SP1, SP2, SPn) de manière répétée pendant au moins un laps de temps au cours d'une exploitation normale du dispositif d'entrée (20) dans laquelle le dispositif d'entrée (20) est configuré pour recevoir des instructions à partir de l'utilisateur, non liées à un étalonnage ;
   - étalonner de manière répétée le dispositif (3) faisant office de capteur de proximité afin d'adapter cette manière la génération d'un des signaux de détection (SD1, SD2, SDn) pour établir une correspondance avec un signal de position correspondant parmi les signaux de position (SP1, SP2, SPn) reçus à partir du dispositif d'entrée (20) lorsque l'objet (F) entre en contact avec le dispositif d'entrée (20).

10. Procédé selon la revendication 9, dans lequel le dispositif (3) faisant office de capteur de proximité est soumis à un étalonnage de manière répétée lors de chaque détection d'une mise en contact dudit au moins un dispositif d'entrée (20) avec l'objet (F).

11. Procédé selon l'une quelconque des revendications 9 ou 10, dans lequel ledit au moins un dispositif d'entrée (20) comprend un écran tactile (21) possédant une surface d'écran tactile (22), et l'étape de détection d'une mise en contact comprend la détection d'une mise en contact de la surface (22) de l'écran tactile avec l'objet (F) et la génération des signaux de position (SP1, SP2, SPn) via ledit au moins un dispositif d'entrée (20), contenant des informations liées à une position de l'objet (F) qui entre en contact avec la surface (22) de l'écran tactile.

12. Procédé selon l'une quelconque des revendications 9 à 11, dans lequel l'étalonnage du dispositif (3) faisant office de capteur de proximité comprend le réglage d'un paramètre de décalage (x_offset, y_offset, z_offset) d'une position détectée par le dispositif (3) faisant office de capteur de proximité en utilisant un signal correspondant parmi les signaux de position reçus (SP1, SP2, SPn).

13. Procédé selon la revendication 12,

- dans lequel chacun des signaux de position (SP1, SP2, SPn) contient des informations représentant des premières coordonnées (x_t, y_t, z_t) de l'endroit auquel l'objet (F) entre en contact avec ledit au moins un dispositif d'entrée (20) ;

- dans lequel le dispositif (3) faisant office de capteur de proximité est configuré pour émettre ledit au moins un signal de détection (SD1, SD2, SDn) lors de la détection de la position de l'objet (F), ledit au moins un signal de détection (SD1, SD2, SDn) contenant des informations représentant des deuxièmes coordonnées (x_p, y_p, z_p) de l'objet (F) ;

- dans lequel l'étalonnage du dispositif (3) faisant office de capteur de proximité comprend le réglage du paramètre de décalage (x_décalage, y_décalage, z_décalage) via le calcul d'une différence entre les premières coordonnées (x_t, y_t, z_t) et les deuxièmes coordonnées (x_p, y_p, z_p).

FIG. 1

1

3

4

40

SD1, SD2,... SDn

SP1, SP2,... SPn

F

22

21

20

2

FIG. 2

FIG. 3A

FIG. 3B

FIG. 3C

FIG. 3D

FIG. 4

S1 — Proximity sensor 3 is tracking the user's finger coordinates in raw/original values:
$x\_p0,$
$y\_p0,$
$z\_p0$

S2 — Proximity sensor 3 outputs the user's finger coordinates with corrected/calibrated values (in signal SD1, SD2, ..., SDn):
$x\_p = x\_p0 + x\_offset$
$y\_p = y\_p0 + y\_offset$
$z\_p = z\_p0 + z\_offset$

S3 — user's finger touching the screen surface?

no

yes

S4 — Input device 20 outputs the user's finger coordinates (in signal SP1, SP2, ..., SPn):
$x\_t,$
$y\_t$
$(z\_t)$

S5 — Re-calibrate proximity sensor 3:
set $x\_offset = x\_t - x\_p0$
set $y\_offset = y\_t - y\_p0$
set $z\_offset = - z\_p0$

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8504944 A
- US 2005248539 A1
- US 2004201575 A1